# EUROPEAN PATENT APPLICATION

(11) **EP 4 353 699 A1**
(43) Date of publication of application: **17.04.2024**
(21) Application number: 22201128.0
(22) Date of filing: 12.10.2022
(51) Int. Cl.: C04B 28/02, C04B 40/00, C04B 103/10

(54) **LOW CARBON CONCRETE ADMIXTURE**

(71) Applicant: Mapei S.p.A., 20158 Milano (IT)
(72) Inventor: FERRARI, Giorgio, 20158 MILANO (IT); CASTIGLIONI, Fabio, 20158 MILANO (IT); CORBO, Piero, 20158 MILANO (IT); SARTA, Clelia, 20158 MILANO (IT); SQUINZI, Marco, 20158 MILANO (IT)
(74) Representative: Bianchetti & Minoja with Trevisan & Cuonzo IPS SRL

(57) **Abstract**

The invention relates to a new admixture for hydraulic compositions which is particularly effective in improving the mechanical performances of concretes based on blended cements and/or with mineral and pozzolanic additions.

## Description

The object of the present invention is a new admixture for hydraulic compositions which is particularly effective in improving the mechanical performances of concretes based on blended cements and/or with mineral and pozzolanic additions.

### Background of the invention

The use of blended cements, wherein the clinker is partially replaced by supplementary cementitious materials (SCMs), is one of the tools to reduce the embodied carbon in cement and to correspondingly produce concrete with lower carbon foot-printing (Low Carbon Concrete, LCC). SCMs include industrial by-products such as fly ash from the coal-operated thermal power stations (FA), ground blast furnace slag (GBFS) from the cast iron manufacturing process, silica-fume (SF) from the silicon and ferrosilicon industry, besides natural treated materials like pozzolana (PZ), limestone (LS) and, more recently, calcined clay (CC).

Despite their positive role in decreasing the embodied carbon of concrete, SCMs are less reactive compared with clinker. For this reason, LCCs develop compressive strength more slowly than normal concretes and require accelerating admixtures to recover the slower early strength development. Many inorganic compounds have the property to accelerate the cement hydration. Among these, chlorides, fluoride, nitrites, nitrates, thiosulfate, and thiocyanates are the most used. The organic compounds used as accelerators include alkanolamines, urea, glyoxal and formate.

Recently, new accelerators based on nano-sized dispersions of metal silicate hydrates (Me-S-H) have been developed. These new generation accelerators act as Secondary Nucleating Agents (SNA) and are superior to the previous generation admixtures in accelerating the cement hydration. WO2010026155 discloses a process for the production of calcium silicate hydrates useful as a hardening accelerator, wherein the precipitation of calcium silicate hydrate from aqueous solutions containing calcium ions and silicate ions or silica is conducted in the presence of a water-soluble comb polymer dispersant useful as superplasticizer for cement mixes. Examples of said compounds are polycarboxylate ethers based on terpolymers of maleic acid, acrylic acid and vinyloxybutyl-polyethylene glycol-5800 with a molecular weight (Mw) of about 40,000 g/mol, terpolymers of maleic acid, acrylic acid and vinyloxybutyl-polyethylene glycol-12000 with a molecular weight (Mw) of about 73,000 g/mol, and polycarboxylate ethers based on copolymers of methacrylic acid and methoxy polyethylene glycol methacrylate-5,000 with a molecular weight (Mw) of about 40,000 g/mol.

EP3080052 discloses the use of transition metals silicate hydrates as setting and hardening accelerators for hydraulic binders. These accelerators consist of water dispersions of transition metal silicate hydrates with particle size lower than 1,000 nm. They are obtained by reacting, in alkaline conditions, a silicon-containing compound with a transition metal-containing compound, possibly in the presence of an alkaline-earth metal containing compound and an aluminum-containing compound, by a high shear process in the presence of water-soluble dispersants. Useful transition metals are chromium, manganese, iron, cobalt, nickel, copper and zinc.

None of the abovementioned accelerating admixtures, included the most recent developments based on metal silicate hydrates disclosed in WO2010026155 and EP3080052, are fully effective in recovering the loss of early compressive strength of LCCs, especially when higher proportions of SCMs are used. Moreover, the abovementioned accelerators increase the reaction rate in the first period of hydration but do not increase the total amount of hydrated phases at longer curing time (28 days or more) and consequently they do not increase the final strength of concrete mixtures.

US Patent 5084103 discloses an improved hydraulic Portland cement composition, comprising a Portland cement having at least 4% C₄AF in combination with at least one higher trialkanolamine selected from triisopropanolamine, N,N-bis(2-hydroxyethyl)-N-(2-hydroxypropyl)amine, tris(2-hydroxybutyl)amine and their mixtures.

WO 2015062798 claims a composition for improving the properties of the cementitious composition wherein the admixture composition comprises at least a polycarboxylate type comb-polymer dispersant and a hydroxyl amine compound selected from N,N-bis (2 hydroxypropyl)-N-(hydroxyethyl) amine and optionally one or more polyhydroxyalkyl ethyleneamine compounds.

WO 2017214108 discloses a cement admixture for cementitious compositions based on glycol ether acetates, particularly including 2-butoxyethyl acetate and 2,2-(butoxyethoxy)ethyl acetate. By adding such admixture at the dosage of 1% by weight of cement, the compressive strength of the resulting mortar is increased by 12% after 7 days of curing, compared to the same mortar without the admixture.

Nevertheless, none of the known solutions are effective in improving the final characteristics of LCCs, particularly in the presence of high fraction of SCMs.

For the abovementioned reasons, there is a real need to develop a new class Low Carbon Concrete Admixtures (LCCAs), specifically designed for enhancing the performances of LCCs. These admixtures are fundamental ingredients for the production of high performance LCCs, whose essential requirements are both the low embodied carbon and the high early and final compressive strength.

### Description of the invention

The present invention relates to a new low carbon concrete admixture (LCCA) which is particularly effective in promoting the development of the early compressive strength of cementitious mixtures. The new admixture by far exceeds the previous generation accelerators, including those described in WO2010026155 and EP3080052, and can be used with any type of cement, included blended cements with SCMs.

The admixture for hydraulic binders of the invention comprises:
a) transition metal silicate hydrates having the general formula

   aMexOy·bMO·cAl₂O₃·SiO_{2·}dH₂O 1)

   wherein
   - Me represents a transition metal whose molar coefficient a is in a range between 0.001 and 2, preferably between 0.01 and 1;
   - M represents an alkaline earth metal whose molar coefficient b is in a range between 0 and 2, preferably between 0.3 and 1.6;
   - the molar coefficient c for Al₂O₃ is in a range between 0 and 2, preferably between 0.1 and 1;
   - H₂O represents the hydration water of the silicate hydrate whose molar coefficient d can vary between 0.5 and 20;
   - X and Y can both be equal to 1 or different, depending on the valence of the transition metal, given that the valence of the oxygen atom in the metal oxide is equal to 2;
   said transition metal silicate hydrate being in form of particles with diameter lower than 1,000 nm, and
b) at least one alkanolamine.

The transition metal is preferably selected from chromium (Cr), manganese (Mn), iron (Fe), cobalt (Co), nickel (Ni), copper (Cu), zinc (Zn) and their mixtures.

The transition metal silicate hydrate may be a mixed silicate hydrate with alkaline earth metals, selected from calcium and magnesium.

The transition metal silicate hydrate is produced by reaction, in alkaline conditions, of a water-soluble silicon-containing compound with a water-soluble transition metal compound and possibly a water-soluble compound of an alkaline earth metal and/or aluminum, the reaction being conducted in the presence of an aqueous solution of a water-soluble dispersant. The water-soluble dispersant preferably comprises at least polycarboxylate ether (PCE) polymer, phosphonate derivatives of polyoxyalkylenes, polynaphthalene sulfonate, polymelamine sulfonate.

Another characteristic of the admixture of the invention is that, beside improving the early strength development of LCCs, it also improves the final compressive strength at longer curing times (28 days or more). Consequently, by using the admixture of the invention it is possible to obtain LCCs characterized by both high early and final mechanical strength also with blended cements or when SCMs are used as additions to concrete, result which was not achievable with the previous generation admixtures.

The admixture of the invention is obtained by combining the accelerating admixtures described in EP3080052 with alkanolamines. Among the transition metal silicate hydrates described in EP3080052, particularly effective are those based on copper silicate hydrates. Among the alkanolamines, particularly useful for the purpose of the invention are diethanolamine (DEA), triisopropanolamine (TIPA) and triethanolamine (TEA).

The alkanolamine : transition metal silicate hydrate weight ratio ranges between 0.01 and 10, preferably between 0.05 and 2, more preferably between 0.1 and 1.

The admixture of the invention can further comprise other substances usually employed in concrete and cement industries. Particularly, it can further comprise hydration retarders, hydration accelerators, secondary nucleating agents, air entraining agents, defoaming agents, plasticizers, superplasticizers, viscosifying admixtures, shrinkage reducing agents, corrosion inhibitors, antibacterials and fungicides and their mixtures. Such complementary ingredients can be added in various proportions according to the final characteristics requested for the formulation.

Among hydration retarders, carbohydrates and derivatives including glucose syrup, maltose syrup, corn syrup, sucrose, beet and cane molasses, welan gum, duitan gum, starch hydrolyzates, dextrose, maltodextrins, mono, di and water-soluble oligosaccharides, sodium gluconate, xylitol, mannitol, maltitol, sorbitol, lactitol and their mixtures can be used.

Among hydration accelerators, inorganic accelerators such as nitrate-based compounds, nitrite-based compounds, thiosulphates, thiocyanate-based compounds, sulphate-based compounds, aluminate-based compounds can be used. Organic accelerators include formate-based compounds and alkanolamines, such as diethanolamine (DEA), triisopropanolamine (TIPA), triethanolamine (TEA), N,N,N',N'-tetra(hydroxyethyl)ethylenediamine (THEED), monoethanolamine (MEA), methyldiethanolamine (MDEA), diisopropanolamine (DIPA) and their mixtures. Such alkanolamines can be added as additional organic accelerators in addition to the alkanolamines defined as component b) of the claimed admixture.

The compositions may also comprise a cementitious and/or supplementary cementitious material and the admixture selected from hydraulic cement, fly ash, slag, silica fume, limestone, natural pozzolana, metakaolin, calcined clay or mixtures thereof.

Secondary nucleating agents comprise admixtures such as those described in WO2019058313, consisting in calcium silicate hydrates seeds in aqueous suspension obtained by hydration of Portland cement or other hydraulic binders. Other useful secondary nucleating agents comprise synthetic ettringite in the form of an aqueous suspensions of polymer stabilized particles with diameter lower than 1,000 nm, such those described by Lo Presti A. et al. (Proceedings of the 12th International Congress on the Chemistry of Cement, Montreal, T1-04.3, Canada, 2007) who studied the synthesis of aqueous suspensions of ettringite by reaction of a water-soluble calcium compound with a water-soluble aluminum compound, a water-soluble sulfate compound and a water-soluble hydroxide ions source in the presence of a water-soluble polyether carboxylate polymer suitable as a superplasticizer for cementitious mixtures. Secondary nucleating agents may further comprise nano-sized organo-mineral phases obtained by layered double hydroxides (LDHs) in the presence of dispersing agents and/or other chemical substances. An of such nanocomposites are those described by Plank, J. et al. (Inorganica Chimica Acta, 359, pp. 4901-4908, 2006).

Typically, the admixture of the invention is in the form of an aqueous suspension, where the different ingredients may be combined in various proportions. The total solids content of the admixture of the invention may be in the range from 10% solids to 70% solids, depending on the proportions which the different ingredients are formulated with.

The characteristics of the invention are described in further details in the following examples with annexed figures.

### Description of the figures

Figure 1 shows the UV-VIS spectra of Example 3 of the invention (solid line) and Example 1 (dashed line).
Figure 2 shows the early age compressive strength development (6, 7, 8 hours) for mortars containing 3% bwoc (by weight of cement) of the additive of Example 1 and Example 3, compared with the reference without any addition and with mortar containing 0.075% bwoc of DEA.

### Example 1

This example describes the synthesis of a transition metal silicate hydrate nano-sized aqueous suspension according to EP 3080052. The product was synthesized by the double precipitation method by combining an aqueous solution of Cu(NO₃)₂ and Ca(NO₃)₂ with a molar ratio Cu/Ca = 0.1 (solution A) with an aqueous solution of Na₂SiO₃ (solution B), in the presence of a solution of polycarboxylate dispersant (solution C) with the use of a high shear comminuting device. The polycarboxylate dispersant was a MPEG-PCE terpolymer of methoxy-polyethyleneglycol-methacrylate of molecular weight of about 5,000 Da, methacrylic acid and polypropyleneglycol-di-methacrylate produced by free radical polymerization according to EP 1547986. The final polymer had a molecular weight of 100,000 Da, as determined by Gel Filtration Chromatography, GFC. 1173 g of a MPEG-PCE aqueous solution (solids content of 7.5% by weight) (solution C) were placed in a 2 L round-bottom glass reactor equipped with mechanical stirrer and agitated at 300 rpm. Next, 398 g of solution A, containing 1 mole of Ca(NO₃)₂ and 0.1 mole of Cu(NO₃)₂ and 550 g of solution B, containing 1.1 mole of Na₂SiO₃ were simultaneously added to solution C and the whole reaction mass was recycled through a mixing cell equipped with a high shear comminuting device (Silverson L4R, operated at 8,000 rpm). Solution A and B were added separately by peristaltic pumps at a constant pumping rate within 80 minutes directly in the high shear zone of the mixing cell. The temperature of the reaction was kept constant at 20°C. The final product was a blue aqueous suspension with a viscosity of 215 cP and a dry content of 23% by weight. The number average particle size of the suspension, determined by Zetasizer Nano series model by Malvern Panalytical Inc., was 89 nm.

### Example 2 (comparative)

This example describes the synthesis of a 100% calcium silicate hydrate nano-sized aqueous suspension, which will be used to better illustrate the properties of the LCCA of the invention. The product was synthesized by the double precipitation method by combining an aqueous solution of Ca(NO₃)₂ (solution A) with an aqueous solution of Na₂SiO₃ (solution B), in the presence of a solution of polycarboxylate dispersant (solution C) with the use of a high shear comminuting device. The polycarboxylate dispersant was a MPEG-PCE ter-polymer of methoxy-polyethyleneglycol-methacrylate of molecular weight of about 5,000 Da, methacrylic acid and polypropyleneglycol-di-methacrylate produced by free radical polymerization according to EP 1547986. The final polymer had a molecular weight of 98,500 Da, as determined by Gel Filtration Chromatography, GFC. 1173 g of a MPEG-PCE aqueous solution (solids content of 7.5% by weight) (solution C) were placed in a 2 L round-bottom glass reactor equipped with mechanical stirrer and agitated at 300 rpm. Next, 398 g of solution A, containing 1.1 mole of Ca(NO₃)₂ and 550 g of solution B, containing 1.1 mole of Na₂SiO₃ were simultaneously added to solution C and the whole reaction mass was recycled through a mixing cell equipped with a high shear comminuting device (Silverson L4R, operated at 8,000 rpm). Solution A and B were added separately by peristaltic pumps at a constant pumping rate within 80 minutes directly in the high shear zone of the mixing cell. The temperature of the reaction was kept constant at 20°C. The final product was a white aqueous suspension with a viscosity of 180 cP and a dry content of 22.5% by weight. The number average particle size of the suspension, determined by Zetasizer Nano series model by Malvern Panalytical Inc., was 110 nm.

### Example 3

In this example the production and the characteristics of the LCAA of the invention are described. 500 g of the water suspension of the transition metal silicate hydrate of Example 1 were mixed under stirring at 25°C with 12.5 g of reagent grade (≥ 99%) diethanolamine supplied by Sigma-Aldrich in a bottom rounded glass reactor. During the addition of diethanolamine, the color of the suspension of transition metal silicate hydrate of Example 1 changed from light blue to violet. The final product was a violet aqueous suspension with a viscosity of 185 cP and a dry content of 23.5% by weight. The number average particle size of the suspension, determined by Zetasizer Nano series model by Malvern Panalytical Inc., was 76 nm.

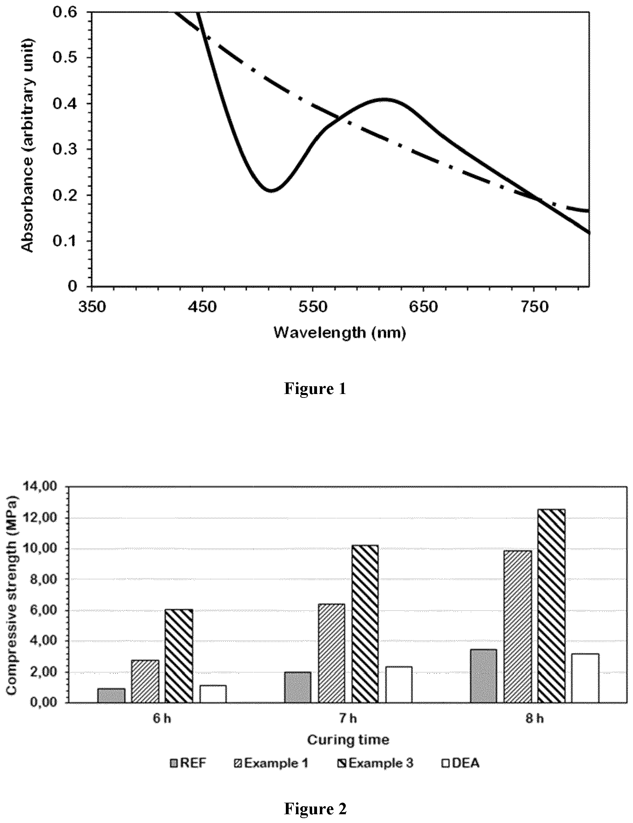

The UV-VIS spectra obtained by diluted suspensions of the product of Example 1 and the product of the invention of Example 3 are shown in Figure 1. The maximum absorbance for the sample of Example 3 was λₘₐₓ= 638 nm (Figure 1, solid line), while no peak was present in the spectrum of Example 1 in the same UV-VIS region (Figure 1, dashed line). The maximum absorbance in the spectrum of the product of the invention of Example 3 is compatible with that of a 1:1 complex between copper and diethanolamine (λₘₐₓ= 631 - 655 nm) reported by Cody I. A. et al. in J. Inorg. Nucl. Chem., 1970, Vol. 32, pp. 3263-3269.

### Example 4 (comparative)

In this comparative example 500 g of the water suspension of nano-sized calcium silicate hydrate of comparative Example 2 were mixed under stirring with 12.5 g of reagent grade (≥ 98.5%) diethanolamine supplied by Sigma-Aldrich. After the addition of diethanolamine no color change was observed, and the suspension remained of its original white-milky color.

### Example 5

The accelerating effect of the product of Example 1 and the product of the invention of Example 3 were compared in mortar tests. Both the products were tested at different dosages (1.0, 2.0 and 3.0% by weight of cement, bwoc) and compared with a reference mortar without any addition. As a comparison, mortars containing diethanolamine DEA at the dosages corresponding to the amount introduced in the formulation of Example 3 of the invention were also tested (0.025, 0.050 and 0.075% bwoc). CEM I 52.5 R cement according to EN-197-1 was used in all the tests with the same amount of mixing water (W/C = 0.40). Mortar mixing and mechanical strength measurements were performed in accordance with norm EN 196-1. Commercial superplasticizer Dynamon NRG 1030 produced by Mapei, consisting in 25% solids aqueous solution of polyethercarboxylate PCE polymer, was used at the dosage of 0.70% bwoc to keep the flow of the fresh mortar in the range between 220 and 230 mm, as measured by flow table test after 15 drops, according to ASTM C1437 norm. The mortars were casted in molds 4 x 4 x 16 cm and cured at 20°C and 95% R.H. The results of the early compressive strength after 6, 7 and 8 hours of curing are shown in Table 1.

**TABLE 1. Compressive strength after 6, 7 and 8 hours of curing for mortars containing increasing dosages of the products of Example 1, Example 3 (invention) and DEA in comparison with reference mortar.**

| **Sample** | **Dos. (% bwoc)** | **Compressive strength (MPa)** | | |
|---|---|---|---|---|
| | | **6 hours** | **7 hours** | **8 hours** |
| Example 1 | 1 | 1.22 | 2.09 | 3.90 |
| | 2 | 1.78 | 3.04 | 5.79 |
| | 3 | 2.78 | 6.43 | 9.88 |
| Example 3 (invention) | 1 | 1.3 | 2.49 | 4.56 |
| | 2 | 2.2 | 4.89 | 8.67 |
| | 3 | 6.03 | 10.24 | 12.50 |
| Diethanolamine DEA | 0.025 | 1.22 | 2.30 | 3.90 |
| | 0.050 | 0.77 | 1.38 | 2.45 |
| | 0.075 | 1.12 | 2.35 | 3.15 |
| Reference | - | 0.96 | 1.97 | 3.47 |

The results of Table 1 show that the LCCA of the invention develops, at any dosage, higher compressive strength compared with the parent product of Example 1 and the reference mortar. On the other hand, the mortars with the separate addition of DEA at the dosages corresponding to the amount of Example 3, do not give any substantial improvement compared with the reference.

The outstanding performance of the LCCA of the invention is quite evident in Figure 2. The product of Example 3, obtained by combining DEA with the copper silicate hydrate suspension of Example 1, is compared at the dosage of 3% bwoc both with the parent product of Example 1 and with DEA at the dosage of 0.075% bwoc, which corresponds to the amount of DEA which is present in the product of the invention of Example 3. At this dosage, the accelerating effect of DEA is negligible and the compressive strength at 6, 7 and 8 hours of curing are the same as the reference mortar without any additions. On the other hand, when the same amount of DEA is combined with the transition metal silicate hydrate suspension of Example 1 to produce the admixture of the invention of Example 3 its effect is surprisingly different. In fact, the relative increase of compressive strength of mortars containing 3% bwoc of the new LCCA of Example 3 compared with the mortar containing the same dosage of Example 1 is 116% after 6 hours, 59% after 7 hours and 26% after 8 hours.

### Example 6 (Comparative)

The product of comparative Example 4, based on the water suspension of nano-sized calcium silicate hydrate of comparative Example 2 mixed with 2.5% of diethanolamine, was compared in mortar tests with the parent product of Example 2. Both the products were tested at the dosage of 3.0% bwoc and compared with a reference mortar without any addition. As a comparison, mortars containing diethanolamine DEA at the dosages corresponding to the amount introduced in the formulation of comparative Example 4 were also tested (0.075% bwoc). CEMI 52.5 R cement according EN-197-1 was used in all the tests with the same amount of mixing water (W/C = 0.40). Mortar mixing and mechanical strength measurements were performed in accordance with norm EN 196-1. Commercial superplasticizer Dynamon NRG 1030 produced by Mapei, consisting in 25% solids aqueous solution of polyethercarboxylate PCE polymer, was used at the dosage of 0.70% bwoc to keep the flow of the fresh mortar in the range between 220 and 230 mm, as measured by flow table test after 15 drops, according to ASTM C1437 norm. The mortars were casted in moulds 4 x 4 x 16 cm and cured at 20°C and 95% R.H. The results of the early compressive strength after 6, 7 and 8 hours of curing at are shown in Table 2.

**TABLE 2. Compressive strength after 6, 7 and 8 hours of curing for mortars containing 3% by bwoc of Comparative Example 2, Comparative Example 4 and 0.075% bwoc of DEA in comparison with reference mortar.**

| **Sample** | **Dos. (% bwoc)** | **Compressive strength (MPa)** | | |
|---|---|---|---|---|
| | | **6 hours** | **7 hours** | **8 hours** |
| Comparative Example 2 | 3 | 2.93 | 6.90 | 10.97 |
| Comparative Example 4 | 3 | 3.15 | 7.36 | 11.50 |
| Diethanolamine DEA | 0.075 | 1.18 | 2.40 | 3.64 |
| Reference | - | 0.97 | 1.89 | 3.51 |

The results of Table 2 indicate that the relative increase in compressive strength of mortars of Comparative Example 4 vs Comparative Example 2 is 7.5%, 6.7% and 4.8% after 6, 7 and 8 hours, respectively. These results are by far inferior to those of Table 1, where the LCCA of the invention (Example 3) vs the parent Example 1 showed surprisingly higher increases of 116%, 59% and 26% after 6, 7 and 8 hours, respectively.

As the only difference between the product of the invention of Example 3 and the product of comparative Example 4 is the copper in the metal silicate hydrate, it can be concluded that the presence of this transition metal in the silicate hydrates is essential for the observed outstanding increase of compressive strength, when combined with diethanolamine.

### Example 7

In this example, 500 g of the water suspension of the transition metal silicate hydrate of Example 1 were mixed under stirring at 25°C with 12.5 g of reagent grade (≥ 99%) triisopropanolamine (TIPA) supplied by Sigma-Aldrich in a bottom rounded glass reactor. During the addition of triisopropanolamine, the color of the suspension of transition metal silicate hydrate of Example 1 changed from light blue to dark blue. The final product was a deep blue aqueous suspension with a viscosity of 198 cP and a dry content of 23.5% weight. The number average particle size of the suspension, determined by Zetasizer Nano series model by Malvern Panalytical Inc., was 87 nm.

The product from Example 7 was used in mortar mixtures in a similar manner as described in Example 5 at 3% bwoc dosage. As a comparison, a mortar containing TIPA at the dosage corresponding to the amount introduced in the formulation of Example 7 of the invention (0.075% bwoc) and a mortar with 3% bwoc of Example 1 were also tested. CEM I 52.5 R cement according EN-197-1 was used in all the tests with the same amount of mixing water (W/C = 0.40). Mortar mixing and mechanical strength measurements were performed in accordance with norm EN 196-1. Commercial superplasticizer Dynamon NRG 1030 produced by Mapei, consisting in 25% solids aqueous solution of polyethercarboxylate PCE polymer, was used at the dosage of 0.70% bwoc to keep the flow of the fresh mortar in the range between 220 and 230 mm, as measured by flow table test after 15 drops, according to ASTM C1437 norm. The mortars were casted in molds 4 x 4 x 16 cm and cured at 20°C and 95% R.H. The results of the early compressive strength after 6, 7 and 8 hours of curing are shown in Table 3.

**TABLE 3. Compressive strength after 6, 7 and 8 hours of curing for mortars containing 3% bwoc of the products of Example 1, Example 7 (invention) and TIPA in comparison with reference mortar.**

| **Sample** | **Dos. (% bwoc)** | **Compressive strength (MPa)** | | |
|---|---|---|---|---|
| | | **6 hours** | **7 hours** | **8 hours** |
| Example 1 | 3 | 5.16 | 9.47 | 11.78 |
| Example 7 (invention) | 3 | 8.55 | 11.75 | 14.5 |
| Triisopropanolamine TIPA | 0.075 | 1.35 | 2.8 | 4.86 |
| Reference | - | 0.96 | 1.97 | 3.47 |

The results of Table 1 show that the LCCA of the invention develops higher compressive strength compared with the parent product of Example 1 and the reference mortar when TIPA is used as alkanolamine. On the other hand, the mortars with the separate addition of TIPA at the dosage corresponding to the amount of Example 7, do not give any substantial improvement compared with the reference.

### Example 8

In this example, 500 g of the water suspension of the transition metal silicate hydrate of Example 1 were mixed under stirring at 25°C with 12.5 g of reagent grade (≥ 99%) triethanolamine (TEA) supplied by Sigma-Aldrich in a bottom rounded glass reactor. During the addition of triethanolamine, the color of the suspension of transition metal silicate hydrate of Example 1 changed from light blue to violet. The final product was a violet aqueous suspension with a viscosity of 192 cP and a dry content of 23.5% by weight. The number average particle size of the suspension, determined by Zetasizer Nano series model by Malvern Panalytical Inc., was 98 nm.

The product from Example 8 was used in mortar mixtures in a similar manner as described in Example 5 at 3% bwoc dosage. As a comparison, a mortar containing TEA at the dosage corresponding to the amount introduced in the formulation of Example 8 of the invention (0.075% bwoc) and a mortar with 3% bwoc of Example 1 were also tested. CEM I 52.5 R cement according EN-197-1 was used in all the tests with the same amount of mixing water (W/C = 0.40). Mortar mixing and mechanical strength measurements were performed in accordance with norm EN 196-1. Commercial superplasticizer Dynamon NRG 1030 produced by Mapei, consisting in 25% solids aqueous solution of polyethercarboxylate PCE polymer, was used at the dosage of 0.70% bwoc to keep the flow of the fresh mortar in the range between 220 and 230 mm, as measured by flow table test after 15 drops, according to ASTM C1437 norm. The mortars were casted in molds 4 x 4 x 16 cm and cured at 20°C and 95% R.H. The results of the early compressive strength after 6, 7 and 8 hours of curing are shown in Table 4.

**TABLE 4. Compressive strength after 6, 7 and 8 hours of curing for mortars containing 3% bwoc of the products of Example 1, Example 8 (invention) and TEA in comparison with reference mortar.**

| **Sample** | **Dos. (% bwoc)** | **Compressive strength (MPa)** | | |
|---|---|---|---|---|
| | | **6 hours** | **7 hours** | **8 hours** |
| Example 1 | 3 | 2.78 | 6.43 | 9.88 |
| Example 8 (invention) | 3 | 4.26 | 6.38 | 10.77 |
| Triethanolamine TEA | 0.075 | 1.08 | 2.00 | 3.82 |
| Reference | - | 0.96 | 1.97 | 3.47 |

The results of Table 4 show that the LCCA of the invention develops higher compressive strength compared with the parent product of Example 1 and the reference mortar when TEA is used as alkanolamine. On the other hand, the mortars with the separate addition of TEA at the dosage corresponding to the amount of Example 8, do not give any substantial improvement compared with the reference.

### Example 9

This example aims to demonstrate that the LCCA of the invention not only promotes the development of early strength but also improves the final strength of cementitious compositions based on blended cements.

Concrete tests were performed by using limestone blended cement type CEM II/A-LL 42.5 according EN 197-1 (limestone content 6 - 20%) at the dosage of 310 kg/m³ and water-to-cement ratio W/C = 0.54. Maximum aggregate diameter was 30 mm. The initial workability of the fresh concrete mixes was set in class S5 (slump > 200 mm) according to EN 206-1 norm with the dosage from 0.30 to 0.60% bwoc of a commercial polycarboxylate superplasticizer produced by Mapei S.p.A. (Dynamon SR41). Compressive strength was measured on concrete specimens 15x15x15 cm after 18 hours, 1, 7, 28 days of curing at 20°C and 95% R.H. The results are shown in Table 5.

**TABLE 5. Compressive strength after 18 hours, 1, 7 and 28 days of curing (20°C, 95% R.H.) of concrete mixtures containing 2.65% bwoc of the LCCA of the invention (Example 3) and 2.65% bwoc of the parent product of Example 1, in comparison with the reference concrete.**

| **Mix** | **Admixture** | **Dos. (% bwoc)** | **Slump (mm)** | **Compressive strength (MPa)** | | | |
|---|---|---|---|---|---|---|---|
| | | | | **18 hours** | **1 day** | **7 days** | **28 days** |
| 1 | Dynamon SR41 | 0.40 | 240 | 4.7 | 7.6 | 23.3 | 30.3 |
| 2 | Dynamon SR41 Example 1 | 0.30 | 230 | 5.8 | 8.5 | 24.1 | 28.4 |
| | | 2.65 | | | | | |
| 3 | Dynamon SR41 Example 3 (invention) | 0.60 | 230 | 8.8 | 12.2 | 30.2 | 35.7 |
| | | 2.65 | | | | | |

The results of Table 5 show that the LCCA of the invention acts both as accelerator for early strength development and as strength enhancer at longer curing times (28 days). Particularly, the LCCA of the invention improves by 87% the compressive strength after 18 hours compared with the reference mixture (Mix 1) and by 18% the compressive strength after 28 days.

On the other hand, the parent product of Example 1 only promotes the early strength but do not give any improvement at longer curing times and causes a reduction of the final strength compared with the reference concrete mix containing only the superplasticizer (Mix 1).

### Example 10

This example aims to demonstrate that the LCCA of the invention can be formulated with other ingredients such as retarders and other accelerators, still keeping its functionality as early strength development and strength enhancer at longer curing times.

154 g of the LCCA of Example 3 were mixed with 332 g of water in a bottom rounded glass reactor and heated at 60°C. Then, 19 g of triisopropanolamine TIPA, 150 g of a 55% solution of sodium thiocyanate NaSCN and 57 g of an 80% solution of syrup of maltose were sequentially added and the resulting mixture was heated for 1 hour at 60°C. During this period, the color of the mixture changed turning from pale violet to light yellow-green to a final brown color. The total solids of the final product was 30%.

### Example 11

Concrete tests were performed with and without the LCCA of Example 10 to verify the strength development at different curing times. A mixture of 75% Type I/II Portland cement and 25% Fly ash was used as cementitious binding material.

Concrete specimens were prepared by mixing Type I/II Portland cement according to ASTM C 150 (267 kg/m³), Class F Fly Ash according to ASTM C 618 (89 kg/m³), maximum diameter 20 mm coarse aggregates (1077 kg/m³) and sand (804 kg/m³).

Dynamon SX superplasticizer produced by Mapei was dosed at 0.47% by mass of the total binder (sum of Portland cement and Fly ash) to control the slump flow of concretes in the range from 160 mm to 210 mm (consistency class S4 according to EN 206-1) and to cast concretes with water-to-binder ratio w/b = 0.45. The dosage of the admixture of the invention (Example 10) was selected for the concrete tests at the dosages of 0.62 and 0.94% of admixture by mass of the total binder (sum of Portland cement and Fly ash). The results of the concrete tests are shown in the following Table 6. These results confirm the excellent behavior of the LCCA of the invention to enhance the compressive strength of concrete at all curing times, from 1 day to 56 days.

### Example 12

This example aims to demonstrate that the LCCA of the invention can be formulated with other nucleating agents, such as ettringite, and additional ingredients such as retarders and other accelerators, still keeping its functionality as early strength development and strength enhancer at longer curing times.

58 g of the LCCA of Example 3 were mixed with 281 g of ettringite aqueous suspension prepared according to Lo Presti A. et al. (Proceedings of the 12th International Congress on the Chemistry of Cement, Montreal, T1-04.3, Canada, 2007), 18 g of triisopropanolamine TIPA and 5 g of an 80% solution of syrup of maltose were sequentially added and the resulting mixture was stirred for 1 hour at room temperature. During this period, the color of the mixture changed turning from pale blue to a light brown/grey color. The total solid content of the final product was 29%.

### Example 13

Concrete tests were performed with and without the LCCA of Example 12 to verify the strength development at different curing times. A cement classified as CEM II/B-LL 42.5R according to norm EN 197-1 (limestone blended cement, 21-35% limestone) was used as cementitious binding material.

Concrete specimens were prepared by mixing CEM II/B-LL 42.5R according to norm EN 197-1 (310 kg/m³) with maximum diameter 30 mm coarse aggregates.

DynamonCube 800 superplasticizer produced by Mapei was dosed at 0.7% by mass of binder for the reference concrete and at 0.6% by mass of binder for the concretes containing the admixture of Example 12 to adjust the slump flow of concretes at the same value of 215 mm (consistency class S4 according to EN 206-1) and to cast concretes with water-to-binder ratio w/b = 0.55.

The dosages of the admixture of the invention (Example 12) were 0.62 and 0.87% of admixture by mass of binder.

The results of the concrete tests are shown in the following Table 7. These results confirm the excellent behavior of the LCCA of the invention to enhance the compressive strength of concrete at all curing times, from 1 day to 28 days.

**Table 6. Results of concrete tests using the LCCA of Example 10 of the invention.**

| **Mix N.** | **Cement** | **Fly ash** | **Total binder** | **Water** | **Dynamon SX** | **LCCA (Example 10)** | **W/B** | **Compressive strength (MPa)** | | | | | **Compressive strength improvement vs REF (%)** | | | | |
|---|---|---|---|---|---|---|---|---|---|---|---|---|---|---|---|---|---|
| | Kg/m³ | Kg/m³ | Kg/m³ | Kg/m³ | % bmob | % bmob | | 10d | 3d | 7d | 28d | 56d | 1d | 3d | 7d | 28d | 56d |
| REF | 267 | 89 | 356 | 160 | 0.47 | - | 0.45 | 15.7 | 27.4 | 31.3 | 38.1 | 42.9 | - | - | - | - | - |
| 1 | 267 | 89 | 356 | 160 | 0.47 | 0.62 | 0.45 | 16.2 | 28.9 | 34.5 | 40.9 | 45.4 | 3.3 | 5.7 | 10.3 | 7.2 | 5.9 |
| 2 | 267 | 89 | 356 | 160 | 0.47 | 0.94 | 0.45 | 16.3 | 29.9 | 34.9 | 41.9 | 45.8 | 3.5 | 9.3 | 11.7 | 9.9 | 6.7 |

**Table 7. Results of concrete tests using the LCCA of Example 12 of the invention.**

| **Mix N.** | **Cement** | **Water** | **DynamonCube 800** | **LCCA (Example 12)** | **W/B** | **Compressive strength (MPa)** | | | **Compressive strength improvement vs REF (%)** | | |
|---|---|---|---|---|---|---|---|---|---|---|---|
| | Kg/m³ | Kg/m³ | % bmob | % bmob | | 1d | 7d | 28d | 1d | 7d | 28d |
| REF | 310 | 160 | 0.7 | - | 0.52 | 10.2 | 28.8 | 35.9 | - | - | - |
| 1 | 310 | 160 | 0.6 | 0.62 | 0.52 | 13.0 | 30.3 | 36.8 | 27.4 | 5.2 | 2.5 |
| 2 | 310 | 160 | 0.6 | 0.87 | 0.52 | 14.1 | 32.1 | 38.5 | 38.2 | 11.5 | 8.4 |

## Claims

1. Admixture for hydraulic binders comprising:
a) transition metal silicate hydrates having the general formula
aMeₓO_{y}·bMO·cAl₂O₃·SiO₂·dH₂O 1)
wherein
- Me represents a transition metal whose molar coefficient *a* is in a range between 0.001 and 2, preferably between 0.01 and 1;
- M represents an alkaline earth metal whose molar coefficient b is in a range between 0 and 2, preferably between 0.3 and 1.6;
- the molar coefficient c for Al₂O₃ is in a range between 0 and 2, preferably between 0.1 and 1;
- H₂O represents the hydration water of the silicate hydrate whose molar coefficient d can vary between 0.5 and 20;
- X and Y can both be equal to 1 or different, depending on the valence of the transition metal, given that the valence of the oxygen atom in the metal oxide is equal to 2;
said transition metal silicate hydrate being in form of particles with diameter lower than 1,000 nm, and
b) and at least one alkanolamine.

2. The admixture for hydraulic binders according to claim 1, wherein the transition metal is selected from chromium (Cr), manganese (Mn), iron (Fe), cobalt (Co), nickel (Ni), copper (Cu), zinc (Zn) and their mixtures.

3. The admixture for hydraulic binders according to claims 1 or 2, wherein the transition metal silicate hydrate is a mixed silicate hydrate with alkaline earth metals.

4. The admixture for hydraulic binders according to one or more of the previous claims, in which the alkaline earth metal is selected from calcium and magnesium.

5. The admixture for hydraulic binders according to one or more of the previous claims, wherein the metal silicate hydrate is in the form of an aqueous suspension of particles with diameter lower than 1,000 nm.

6. The admixture for hydraulic binders according to one or more of the previous claims, wherein the transition metal silicate hydrate is produced by reaction, in alkaline conditions, of a water-soluble silicon-containing compound with a water-soluble transition metal compound and possibly a water-soluble compound of an alkaline earth metal and/or aluminum, the reaction being conducted in the presence of an aqueous solution of a water-soluble dispersant.

7. The admixture for hydraulic binders according to one or more of the previous claims, wherein the water-soluble dispersant comprises at least polycarboxylate ether (PCE) polymer, phosphonate derivatives of polyoxyalkylenes, polynaphthalene sulfonate, polymelamine sulfonate.

8. The admixture for hydraulic binders according to one or more of the previous claims, wherein the alkanolamine is selected from diethanolamine, triisopropanolamine, triethanolamine, N,N,N',N'-tetra(hydroxyethyl) ethylenediamine, monoethanolamine, methyldiethanolamine, diisopropanolamine and their mixtures.

9. The admixture for hydraulic binders according to one or more of the previous claims, wherein the alkanolamine is mixed with the transition metal silicate hydrate in the weight ratio between 0.01 and 10, preferably between 0.05 and 2, more preferably between 0.1 and 1.

10. The admixture for hydraulic binders according to one or more of the previous claims, further comprising at least one of hydration retarders, hydration accelerators, secondary nucleating agents, air entraining agents, defoaming agents, plasticizers, superplasticizers, viscosifying admixtures, shrinkage reducing agents, corrosion inhibitors, antibacterials and fungicides.

11. Cementitious composition comprising at least one cementitious and/or supplementary cementitious material and the admixture according to one of claims 1 to 10.

12. The cementitious composition of claim 11, wherein the at least one cementitious and/or supplementary cementitious material comprises at least one hydraulic cement, fly ash, slag, silica fume, limestone, natural pozzolana, metakaolin or calcined clay.
